# EUROPEAN PATENT SPECIFICATION

(11) **EP 2 159 574 B1**
(45) Date of publication and mention of the grant of the patent: **28.09.2011**
(21) Application number: 09163457.6
(22) Date of filing: 23.06.2009
(51) Int. Cl.: G01N 29/04, G01N 29/22, F16L 55/26, F16L 55/38, B08B 9/055

(54) **Device for pipeline inspection and method of its use**
Vorrichtung zur Inspektion von Pipelines und Verwendungsverfahren
Dispositif pour inspection de canalisations et son procédé d'utilisation

(30) Priority: 23.06.2008 NL 2001712
(43) Date of publication of application: 03.03.2010
(73) Proprietor: Röntgen Technische Dienst B.V., 3046 NC Rotterdam (NL)
(72) Inventor: Bouma, Tjibbe, 276132, Singapore (SG); van Doornik, John Henri, 3817 DA, Amersfoort (NL); van Hoorn, Willem Allard, 2613 CR, Delft (NL)
(74) Representative: Hatzmann, Martin

(56) References cited:
- EP-A1- 0 581 616
- EP-A2- 1 172 155
- WO-A-2008/010712
- WO-A-2008/041844
- US-A- 4 077 080
- US-A- 4 122 575
- US-A1- 2005 115 588
- US-A1- 2005 283 927

## Description

The invention relates to a device for pipeline inspection and a method of its use. More specifically the present invention relates to the inspection of water pipelines.

Water pipelines are generally installed subsoil and are constructed from various materials of construction such as e.g. polymers, ceramics, metals concrete and the like. Currently most water supply lines reach the end of their service life and need to be replaced. This replacement involves the excavation of the pipeline, cutting out the old pipeline, installing a new pipeline and reburying the replaced pipeline. This replacement involves considerable expenditure and needs to be planned well ahead. For the replacement thereof it is necessary to know which pipelines are to be replaced first. A pipeline that is still in good shape being replaced too early is a waste of investment, whereas a pipeline being replaced too late is even worse since water can leak away, the water can get contaminated and even regions of soil can be flushed away, generating dangerous situations. An appropriate monitoring and inspection of the pipelines is therefore needed.

Specific indicators for upcoming pipeline failure are the un-roundness (ellipticity) and disturbances or discontinuities in the material of construction of the pipeline wall. The mapping of these parameters helps indicating the need for and/or the planning of the replacement of certain pipeline sections.

The inspection and monitoring of water transporting pipelines is generally performed by keeping track of failure statistics and by excavation and destructive testing of the pipeline to be inspected. Since the pipeline has to be excavated, this is generally a costly and complex procedure.

Accordingly, there exists a need for targeted non destructive inspection runs on the basis of which maintenance and preventive replacement can be more efficiently planned. The object of the invention can thus be seen in providing an alternative method for inspecting pipelines.

It is known to inspect pipelines through the use of pipeline inspection devices or 'pigs' such as are disclosed in EP 1 172 155 and WO 2008/010712.

These and/or other objects can be reached by a method of inspecting pipelines according to the invention.

The invention provides a method for inspecting pipelines, the method comprising the steps as set out in claim 1.

For a better understanding, embodiments of the inspection method will be further elucidated by the following Figures, wherein:
Fig. 1 is a first schematic cross section of a first inspection device;
Fig. 2 is a second schematic cross section of a first inspection device;
Fig. 3 is a schematic diagram of a second inspection device;
Fig. 4 is schematic cross section of a third inspection device;
Fig. 5 is a schematic cross section through plane A-A' of figure 1;
Fig. 6 is a schematic diagram of two cross sections through a pipeline.
Fig 7a a fourth device;
Fig 7b a cross section of the device according to figure 7a;
Fig 8a a fifth device;
Fig 8b a cross section of the device according to figure 8a;

In the figures and the description the same or corresponding parts will have identical or similar reference signs. The inspection devices shown should not be understood as limiting the invention in any way or form.

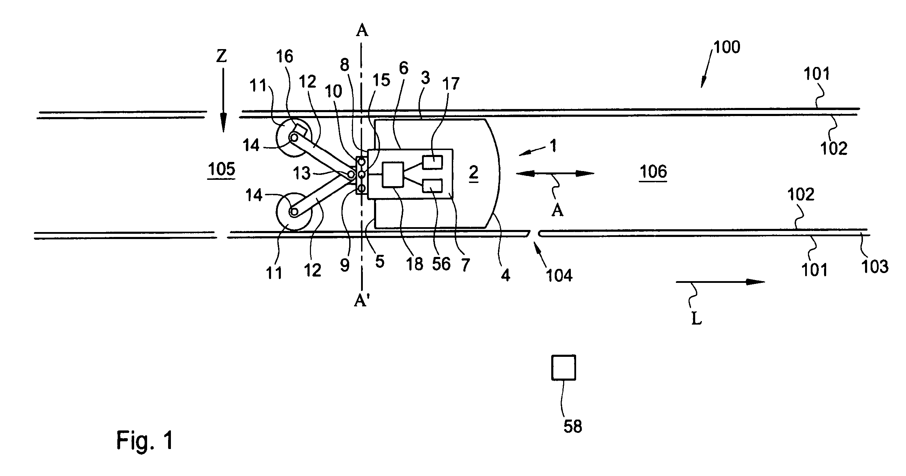

In figure 1 a first cross section of pipeline 100 is depicted wherein an inspection device 1 is positioned. The pipeline is opened, for example at location Z for positioning the device 1 in the pipeline and optionally closed again. The pipeline 100 comprises a wall 101, having an inside 102 and an outside 103.

The wall 101 of the pipeline is having a defect 104, being a hole through the wall from the inside 102 to the outside 103. Upstream and downstream sections 105 and 106 can contain a fluid (not shown). The downstream section 106 is moving in direction L ahead of the inspection device 1 and the upstream section 105 is moving in direction L as well trailing the inspection device. The fluid inside the pipeline can be provided under different pressures in order to exert a force upon the inspection device 1. This force will be able to transport the device 1 in a controlled manner through the pipeline 100. The pressure difference can be generated in a way to be explained further below.

In order to have a decent pressure built up in order to transport the device, the device should close of substantially the complete cross section of the pipeline to be inspected. In order to obtain that the pipeline is substantially closed of by means of the device, the inspection device 1 comprises a compliant shell 2, which can for instance be a known cleaning device for cleaning pipelines. These devices are generally referred to as pigs or as cleaning pigs. The compliant shell can thus be a cleaning pig additionally provided with a space 6. The compliant shell 2 can alternatively be specially produced around the internal casing 7. The compliant shell can for example be made out of elastic or rubbery materials such as foams. One type of foam that can be suitable is polyurethane foam. Compliant is in this sense to be interpreted as at least less rigid than the pipeline it is adapted to be transported through in order not to damage the pipeline as such. The rigidity can for example be indicated by the Shore hardness. A shore hardness of for example a waterline made out of polyvinylchloride (PVC) is above 70 Shore A hardness or above 20 Shore D hardness, whereas the material is at least lower than these values or at least lower than the hardness values of the pipeline where through the inspection device is to be transported.

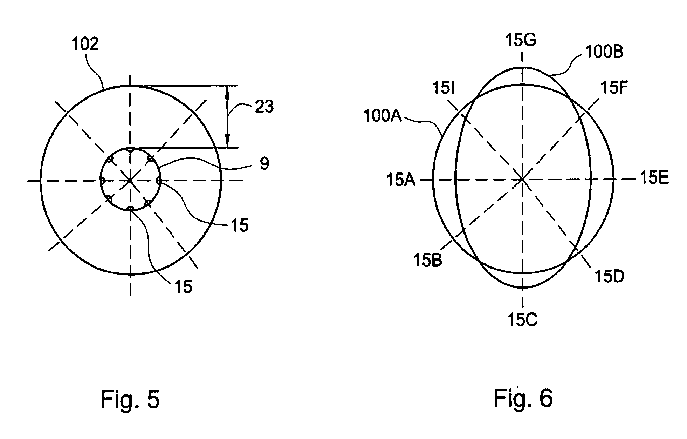

The inspection device 1 is equipped with a casing 7 which is preferably fluid tight. The casing 7 can contain a power source, such as a battery pack 17, and preferably a logic circuit 18. The logic circuit 18 can be electronically connected with a transmitter and/or a receiver. The transmitter can transmit signals towards the outside wall 103 of the pipeline 100 and the receiver can be adapted to receive signals that are partly or completely reflected by the inside 102 and/or the outside 101 of the pipeline 100. In one embodiment the casing is provided with a rounded front side in relation to the direction of its movement L. This reduces the possibility of the inspection device 1 of getting stuck in constrictions of the pipeline 100. The internal casing 7 which is also referred to as inner case 7 may be moulded into the compliant shell 2 which is also referred to as outer case 2. The device 1 comprises at least one transmitter 15 and the at least one receiver 15 which may be connected to the outside on the inner casing. The transmitter 15 is arranged to submit a wireless signal to the (inner) wall of a pipeline and the receiver 15 is arranged to receive reflections of the transmitted signal on the wall of the pipeline for the internal inspection of the pipeline. In this application reflection of a signal also includes diffraction. A plurality of transmitters 15 and receivers 15 is provided which are arranged along a circumference of the device for obtaining information of the (inner) wall of the pipeline which in formation in combination covers a full circumferential portion of the wall.In one embodiment there are for example eight ultrasonic transmitter/receivers 15 in the form of sensors/transducers 15 positioned in a sensor ring 9. A different number or type of sensors can be used and clearly this is within the scope of the present invention. Each ultrasonic sensors 15 can be covering a, or can be directed to a specific region of the inside cross section of the inner wall 102. Each sensor/transducer is provided with a well known probe for transmitting ultrasound and for receiving reflection of the ultrasound on the inner wall of the pipeline. Preferably each region includes a section covering an angle of approximately 45 degrees of the circumference of the inside wall 102 of the pipeline 100. The ultrasonic sensors 15 can thus be arranged such that each is positioned at an angle of approximately 45 degrees with respect to the two neighbouring ultrasonic receivers 15. The configuration of the sensors 15 is schematically depicted in figure 5.

The differences in distance from each sensor 15 to the wall of the pipeline 100 can be measured. Each sensor 15 can measure a distance 23, which is the stand off between the sensor ring 9 and the inner side 102 of the pipeline 100. The sensors 15 in the directions 15c and 15 g together measure the diameter of the pipeline cross section in the direction 15c-15g. The measured distances each must be added up with the diameter of the sensor ring 9 in order to obtain the inner diameter of the pipeline 100.

In figure 6 a schematic drawing of cross sections 100a and 100b of the pipeline 100 is given. In figure 6 the cross section 100a of the pipeline 100 is depicting the normal shape of the pipeline 100, whereas the cross section 100b is depicting the pipeline 100 in oval, compressed state. The distances measured by the sensors in the directions 15a-15i can be different. In case the pipeline is compressed, the sensors in the direction 15a, 15b, 15d, 15e, 15f, 15i measure a shorter distance to the centreline of the pipe 100, whereas the sensors arranged in the direction 15c and 15g experience a larger distance.

The device 1 can be further equipped with at least one rotatable wheel 11, being able to roll against the inner side 102 of the pipeline 100. The at least one rotatable wheel 11 can be equipped with a measurement instrument 16, measuring each revolution of the rotatable wheel 11. From the measurement of each or the number of revolutions, the travelled distance can be calculated. The instrument 16 can be electrically connected to the logic circuit 18 inside the inner casing 7. The data generated by the instrument 16 can be stored on an internal storage device that can be a part of the logic circuit or can be a separate storage device such as a hard disk, a flash memory or the like. In another embodiment these data can be directly transmitted to an external receiver.

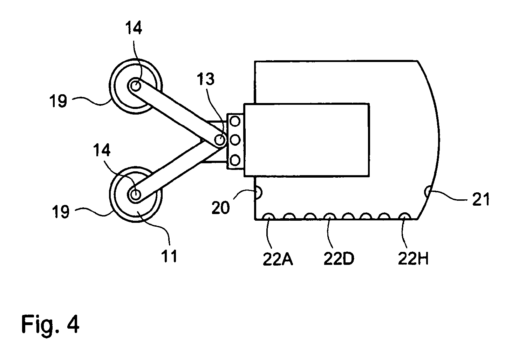

In order to prevent the rotatable wheel from skidding, a rubber tire 19 can be arranged around the rotatable wheel 11 as is depicted in figure 4. The device can be further equipped with pressure sensors 20, 21 and 22a-22h. The pressure sensor 20 can measure the pressure on the upstream side and the pressure sensor 21 can measure the pressure on the downstream side of the device. The pressure sensors 22a-22h can generate a pressure profile along the wall of the compliant shell. With this arrangement an additional indicator is presented for detecting leaks. Where the device is confronted with a leak or another defect, the pressure profile will be disturbed, which the array of sensors 22a-22h will register. The sensors can be connected to the electrical circuit as well, so that the information acquired can be logged or stored on a time base.

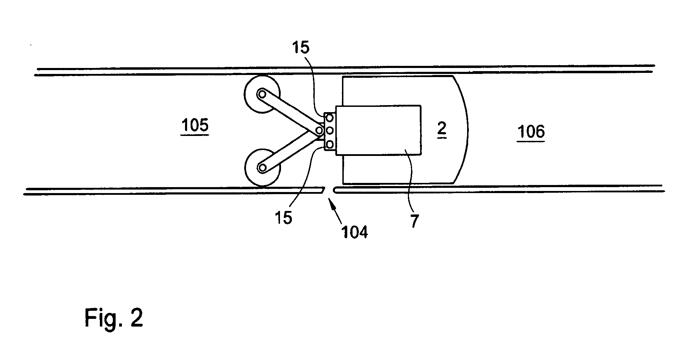

In case the ultrasonic sensors 15 are confronted with a disruption such as hole 104, as depicted in figure 2, the disruption is registered by the ultrasonic sensors 15 because of a disturbance in the local reflection of at least one of the ultrasonic sensors 15.

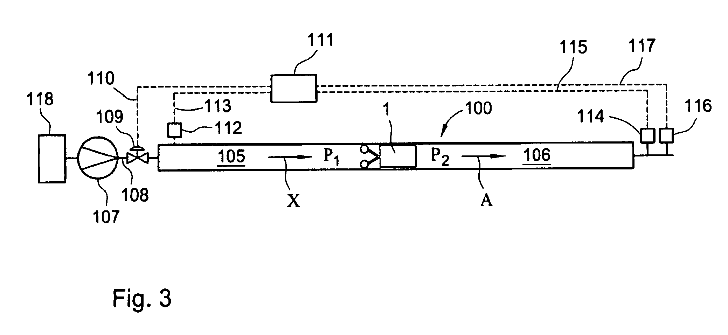

The inspection device 1 can be transported through the pipeline by an arrangement as depicted in figure 3. The upstream section 105 in the pipeline 100 can be fed with a fluid through the feeding device 107. The fluid in the upstream section is exerting a pressure upon the inspection device which is higher than the pressure in the section 106 downstream of the inspection device 1. The fluid acts herein as a sort of propelling agent, generating a pressure difference. Hence it holds that the device may be transported through the pipeline by difference in pressure in fluid on each of both sides 105, 106 of the device 1. The speed of motion of the device may be controlled by controlling the flow X of the fluid and/or by controlling the difference in pressure (P1-P2). It may be that pressure is build up by introducing a fluid into the pipeline at one side 105 of the device. It may also be that the device 1 is being transported through the pipeline by creating a difference in pressure in fluid between both sides 105, 106 of the device which sides, in use, are separated relative to each other in an axial direction B of the device which, in use, extends in a travelling direction L through the pipeline and which is, in this example, the same as an axial axes A of the pipeline.

The feeding device 107 can be a pump in case a liquid is used as the propelling agent, and the feeding device 107 can be a compressor in case a gas is used as propelling agent.

The flow of the fluid can be controlled by the control valve 109. The control valve 109 can be a manual operated valve, but can also be electronically and/or pneumatically connected through connecting line 110 to a control device 111. This control device 111 can be a computer such as a PLC or any other suitable logic controlling device. The flow of the fluid can for instance be measured with a first flow meter 112. The flow meter 112 can be electronically connected to the control device 111. By measuring a certain flow with the flow meter 112, a possible offset from a certain set value of the flow can be corrected through the controlling device in order to correct the position of the control valve 109.

Further the measuring of the flow of fluid can give an substantially accurate indication of the time based location of the inspection device.

The flow can alternatively or additionally also be measured downstream of the pipeline by second flow meter 114. Also the flow of the fluid can be controlled downstream of the pipeline by the control valve 116, comparable to control valve 109. In case of compressible fluids such as gases, both flows can be measured in order to obtain a more realistic estimate of the time based location of the inspection device. Additionally also the pressures upstream and downstream the inspection device can be measured in order to obtain additional parameters for determining the time based location of the inspection device 1. The flow meter 114 can be electronically connected to the control device 111 such that the time based flow can be logged or stored.

Since this flow is related to the time based position of the inspection device 1, the position in time of the inspection device 1 can be deduced.

Since the time based position of the device can be calculated through the flow of the propelling fluid and the ellipticidy of the pipeline can be measured on a time based as well, the location of the ellipticidy and/or other defects can be substantially accurately be determined. Thus where the ellipticidy of the pipeline exceeds a certain threshold value, the pipeline can for instance be repaired only on those locations where the threshold is exceeded.

With the amount of fluid forced into the pipeline 100 by means of the feeding device 107, the travel speed of the inspection device 1 can be set and controlled. In a preferred embodiment, the speed of travel of the device 1 is such that the scaling and/or other debris is not swirled too much in order to maintain visibility. This is an issue when for instance a video camera as receiver is applied. In addition the speed of travel of the device 1 is such that the vibration of the tool due to the motion and friction is within predefined limits for obtaining an acceptable measurement, for example if an ultrasonic measurement is carried out as discussed hereinafter. For this reason, the speed of travel should not exceed approximately 40 cm/s. The value of 40 cm/s was established during a test run by increasing the flow stepwise for a given situation (pipe material, inner diameter, surface condition, tool material and diameter). Other specific situations may allow or require a different maximum speed of travel. A travel speed of the inspection device 1 of about 20 cm/s reduces the amount of swirled debris considerably. Preferably a travel speed below 25 cm/s is applied.

Accordingly a method of spotting pipelines that need repair or replacement can be performed more efficient, less complex and in a less expensive way. The method thus preferably generate easy accessible and reproducible results.

It is essential to know where any defect is occurring. So an adequate measurement of the travelled distance of the inspection device is essential.

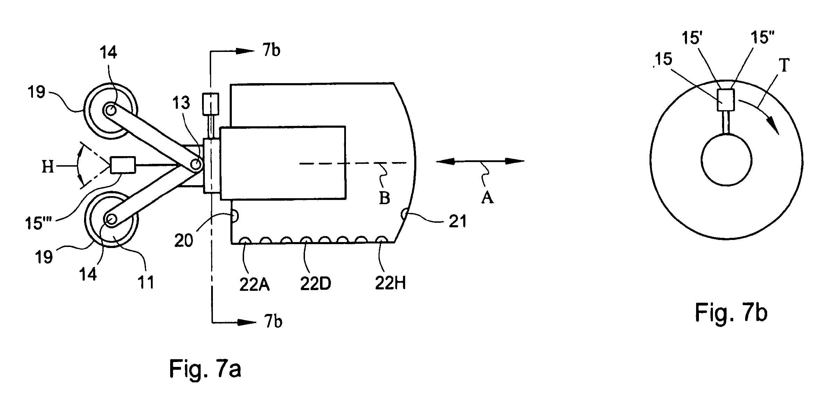

In any embodiment of the invention as described before numerous adaptations and modifications are possible. For instance, as shown in figure 7a, 7b, the at least one transmitter 15 and the at least one receiver 15 may be arranged to rotate for scanning a full circumferential portion of the wall. In this example said rotation is in a tangential direction T of the pipeline (a tangential direction T relative to an axial axes B of the device extending in the travelling direction L). It may be in any embodiment that the at least one transmitter 15 and the at least one receiver 15 may be arranged to rotate around the axial axis A of the pipeline (extending in the travelling direction L of the device 1). The transmitter 15 may comprise at least one lamp 15' for transmitting light and wherein the receiver comprises at least one camera 15" for obtaining at least one image of the wall of the pipeline which is lighted by means of the at least one lamp.

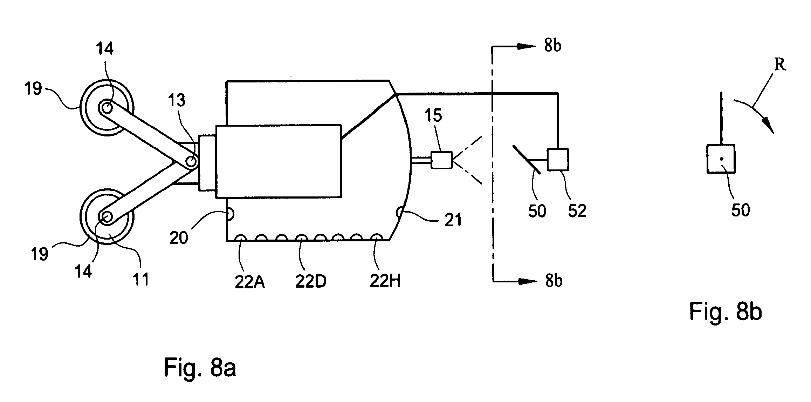

It may also be that the device is provided with a receiver 15 comprising a camera 15"' wherein the opening angle H of the camera is directed into a travelling direction L of the device (a direction of the axial axis A of the pipeline) or backward relative to said travelling direction. It is also possible as discussed in relation to figure 6 that the opening angle of the camera deviates from the travelling direction of the device. In each case the camera may comprises a wide angle lens. As shown in figure 8a, 8b the device 1 may be provided with at least one side view mirror 50 for obtaining images of the side wall by means of the camera 15. The device may be arranged for rotating the mirror around an axial direction B of the device extending in a travelling direction L of the device and in this example being the same, in use, as an axial axis A of the pipeline for scanning the wall of the pipeline in an tangential direction of the pipeline. In this example the mirror is rotated in the tangential direction T by means of a motor 52 which is attached to the inner case. In each embodiment the at least one lamp may, in use, transmit visible light and the at least one camera 15 may be arranged to detect visible light for obtaining the at least one image. It may also be, for example with reference to figure 4 or 7a, 7b that the transmitter is provided with at least one laser-transmitter 15 for transmitting a laser beam towards the wall of the pipeline and wherein the receiver 15 is arranged to receive laser light from the laser beam which is reflected on the wall of the pipeline. It may also be, for example with reference to figure 4 or 7a, 7b that the at least one transmitter 15 is arranged for transmitting ultrasound towards the wall of the pipeline and wherein the at least one receiver 15 is arranged for receiving ultrasound from the transmitted ultrasound which is reflected on the wall of the pipeline.

Hence, other sensors can be installed on the device as well such as a video camera. A wide angle lens can be advantageous in order to get a good picture of the complete circumference of the inner wall 102. Also two devices can be sent through the pipeline, the first to remove scaling and the second to measure and collect the above described data. The first one may be a dummy pig which does not comprise any equipment for scanning the inner wall of the pipeline. A number of alternative and/or additional measurements of the travelled distance of the inspection device 1 can be performed; like e.g. a radio transmitter 56 inside the inspection device 1 and a continuous scanning and tracking above ground with a radio receiver. The radio transmitter 56 can be used the transmit data obtained by scanning by means of the at least one transmitter/receiver 15. This information can be received by means of the radio receiver 58. The radio receiver can also be used for determining the position of the radio transmitter 56 and thereby the position of the device 1. Another way of measuring the distance of travel of the inspection device is by a GPS (Global Positioning System). The device may be provided with a GPS receiver for obtaining positioning date of the device (in the pipeline) This time based position information can be stored within the logic circuit or outside on a remote storage device.

For each embodiment it may be that controlling of the speed of the device comprises the step of controlling the speed such that a vibration of the device in the pipeline is avoided or limited. Such vibration can be detected by well know means, such as an acceleration sensor attached to the device. It may also be that the speed controlling step comprises controlling the speed such that swirling of debris in the fluid in the pipeline is avoided or limited. This swirling debris can be detected for example by means of the receiver 15 if the receiver comprises a camera. It may be that the speed of the device in the pipeline is reduced if the device vibrates in the pipeline and/or if debris in the fluid is swirling. It may also be that the speed of the device is reduced by reducing the pressure difference and/or reducing the flow of the fluid in the pipeline.

The inspection device can be provided with an inclinometer in order to spot any unusual height differences of the pipeline.

## Claims

1. Method for inspecting pipelines, the method comprising the steps of:
- entering a device into a pipeline to be inspected wherein the device comprises an outer compliant shell around an inner casing comprising a power supply, an outside and a logic electrical circuit, at least one transmitter and at least one receiver connected to the inner casing, the at least one receiver and the at least one transmitter being electrically connected to the logic electrical circuit, the method further comprising:
- optionally closing the pipeline
- having the device being transported through the pipeline by difference in pressure in fluid on each of both sides of the device
- transmitting at least a signal from the device
- receiving a reflected signal from the wall of the pipeline
- storing, logging, processing and/or transmitting the reflected signals, more particularly storing, logging, processing and/or transmitting the received signals.
- controlling the speed of motion of the device by controlling the flow of the fluid and/or by controlling the difference in pressure, **characterized in that** the speed controlling step comprises controlling the speed such that a vibration of the device in the pipeline is avoided or limited and/or that the speed controlling step comprises controlling the speed such that swirling of debris in the fluid in the pipeline is avoided or limited.

2. Method according to claim 1 comprising the step of:
- building up pressure by introducing a fluid into the pipeline at one side of the device.

3. Method according to claim 1 or 2 comprising the step of:
having the device being transported through the pipeline by creating a difference in pressure in fluid between both sides of the device which sides, in use, are separated relative to each other in an axial direction of the pipeline.

4. Method according to any preceding claim 1-3, wherein the speed of the device in the pipeline is reduced if the device vibrates in the pipeline and/or if debris in the fluid is swirling.

5. Method according to claim 45, wherein the speed of the device is reduced by reducing the pressure difference and/or reducing the flow of the fluid in the pipeline.

6. Method according to any preceding claim, wherein the step of controlling the speed of motion of the device reduces the flow of the fluid so that the amount of swirling debris and/or vibrations is limited.

7. Method according to any preceding claim, wherein the pipeline is a water pipeline.

8. Method according to any preceding claim, wherein the fluid is water.

9. Method according to any preceding claim, wherein the fluid is air or another gas.

10. Method according to any of the preceding claims, wherein the transmitted signal is ultra sound.

11. Method according to any of the preceding claims, wherein the received signal is light and the receiver is a video camera.

12. Method according to any of the preceding claims, wherein the distance of the device is measured by measuring the amount of fluid that pumped into the pipeline downstream of the device and/or the amount of fluid that is exiting the pipeline downstream of the device.

13. Method according to any of the preceding claims, wherein the pressure downstream and upstream of the device is measured.

14. Method according to claim 13, wherein the measured pressures are logged or stored.

15. Method according to any of the preceding claims, wherein ellipticidy is measured.

16. Method according to any of the preceding claims -, wherein thickness of the wall is measured, preferably by reflection of the inside and the outside of the wall.

17. Method according to any of the preceding claims wherein prior to inspecting the pipeline by means of the device a dummy pig is travelled through the pipeline, for example for detection obstacles in the pipeline which might damage the device.

18. A method according to any preceding claim wherein the at least one transmitter and the at least one receiver are connected to the outside on the inner casing.

19. A method according to any preceding claim wherein the outside casing is a standard cleaning foam pig for travelling through water pipelines wherein the foam pig is made for example from polyurethane foam.

20. A method according to any preceding claim wherein the inner case is moulded into the outer case.

21. A method according to any preceding claim wherein the transmitter is arranged to submit a wireless signal to the (inner) wall of a pipeline and the receiver is arranged to receive reflection of the transmitted signal on the wall of the pipeline for the internal inspection of the pipeline.

22. A method according to claim 21 wherein a plurality of transmitters and receivers are provided which are arranged along a circumference of the device for obtaining information of the (inner) wall of the pipeline which in formation in combination covers a full circumferential portion of the wall.

23. A method according to claim 21 or 22, wherein the at least one transmitter and the at least one receiver are arranged to rotate for scanning a full circumferential portion of the wall.

24. A method according to any preceding claim wherein the transmitter comprises at least one lamp for transmitting light and wherein the receiver comprises at least one camera for obtaining at least one image of the wall of the pipeline which is lighted by means of the at least one lamp.

25. A method according to claim 24 wherein the at least one lamp, in use, transmits visible light and wherein the at least one camera is arranged to detect visible light for obtaining the at least one image.

26. A method according to claim 24 or 25 wherein the opening angle of the camera is directed into a axial direction of the device extending in a travelling direction of the device (an axial direction of the pipeline) or backward relative to said travelling direction or wherein the opening angle of the camera deviates from the travelling direction of the device.

27. A method according to claim 24, 25 or 26 wherein the camera comprises a wide angle lens.

28. A method according to claim 26 or 27 wherein the device is provided with at least one side view mirror for obtaining images of the side wall by means of the camera.

29. A method according to claim 28 wherein the device is arranged for rotating the mirror around an axis corresponding with an axial direction of the device extending in a travelling direction of the device for scanning the wall of the pipeline in an tangential direction of the pipeline.

30. A method according to any preceding claim wherein the transmitter is provided with at least one laser-transmitter for transmitting a laser beam towards the wall of the pipeline and wherein in receiver is arranged to receive laser light from the laser beam which is reflected on the wall of the pipeline.

31. A method according to any preceding claim wherein the at least one transmitter is arranged for transmitter ultrasound towards the wall of the pipeline and wherein the at least one receiver is arranged for receiving ultrasound from the transmitted ultrasound which is reflected on the wall of the pipeline.

32. A method according to any preceding claim the device further comprising a positioning device in the inner casing or inside the outer compliant shelL

33. A method according to claim 32 wherein the positioning device is arranged to measure a travel distance of the device in a pipeline.

34. A method according to claim 32 or 33 wherein the positioning device comprises a GPS receiver and/or a radio transmitter.

35. A method according to any preceding claims 32, 33 or 34 wherein the positioning device comprises a rotatable wheel and a revolution registration instrument, able to measure revolutions of the rotatable wheel.

## Patentansprüche

1. Verfahren zum Prüfen von Rohrleitungen, wobei das Verfahren die Schritte aufweist:
- eine Einrichtung wird in eine Rohrleitung, die zu prüfen ist, eingebracht, wobei die Einrichtung eine äußere nachgiebige Hülle um ein inneres Gehäuse aufweist, das eine Leistungszufuhr bzw. ein Netzteil, eine Außenseite und eine elektrische Logikschaltung, zumindest einen Übertrager und zumindest einen Empfänger, die an das innere Gehäuse angeschlossen sind, aufweist, wobei der zumindest eine Empfänger und der zumindest eine Sender elektrisch an die elektrische Logikschaltung angeschlossen sind, wobei das Verfahren ferner aufweist:
- die Rohrleitung wird optional verschlossen,
- die Einrichtung wird durch die Rohrleitung über einen Druckdifferenz des Fluids auf beiden Seiten der Einrichtung transportiert,
- zumindest ein Signal wird von der Einrichtung gesendet,
- ein reflektiertes Signal von der Wand der Rohrleitung wird empfangen,
- die zurückgeworfenen Signale werden gespeichert, registriert, verarbeitet und/oder gesendet, wobei insbesondere die empfangenen Signale gespeichert, registriert, verarbeitet und/oder gesendet werden,
- die Bewegungsgeschwindigkeit der Einrichtung wird durch Steuern des Stromes des Fluids gesteuert und/oder wird durch die Druckdifferenz gesteuert, **dadurch gekennzeichnet, dass** der Schritt zum Steuern der Geschwindigkeit aufweist, dass die Geschwindigkeit so gesteuert wird, dass eine Vibration der Einrichtung in der Rohrleitung vermieden oder beschränkt wird, und/oder dass der Schritt zur Geschwindigkeitssteuerung aufweist, dass die Geschwindigkeit so gesteuert wird, dass das Aufwirbeln von Schlamm bzw. Schutt in dem Fluid in der Rohrleitung vermieden oder beschränkt wird.

2. Verfahren nach Anspruch 1, das den Schritt aufweist:
- Druck wird aufgebaut, indem ein Fluid in die Rohrleitung auf einer Seite der Einrichtung eingeführt wird.

3. Verfahren nach Anspruch 1 oder 2, das den Schritt aufweist:
- die Einrichtung wird durch die Rohrleitung durch Erzeugen einer Druckdifferenz in dem Fluid zwischen beiden Seiten der Einrichtung befördert, wobei diese Seiten im Betrieb relativ zueinander in einer Axialrichtung der Rohrleitung getrennt sind.

4. Verfahren nach einem der voranstehenden Ansprüche 1 bis 3, wobei die Geschwindigkeit der Einrichtung in der Rohrleitung verringert wird, falls die Einrichtung in der Rohrleitung vibriert und/oder falls Schlamm bzw. Schutt in dem Fluid herumgewirbelt wird.

5. Verfahren nach Anspruch 4, wobei die Geschwindigkeit der Einrichtung durch Verringerung der Druckdifferenz und/oder Verringerung der Strömung des Fluids in der Rohrleitung verringert wird.

6. Verfahren nach irgendeinem der voranstehenden Ansprüche, wobei der Schritt zum Steuern der Bewegungsgeschwindigkeit der Einrichtung den Strom des Fluids verringert, so dass die Menge von wirbelndem Schlamm bzw. Schutt und/oder Vibrationen beschränkt wird.

7. Verfahren nach irgendeinem der voranstehenden Ansprüche, wobei die Rohrleitung eine Rohrleitung für Wasser ist.

8. Verfahren nach irgendeinem der voranstehenden Ansprüche, wobei das Fluid Wasser ist.

9. Verfahren nach irgendeinem der voranstehenden Ansprüche, wobei das Fluid Luft oder ein anderes Gas ist.

10. Verfahren nach irgendeinem der voranstehenden Ansprüche, wobei das gesendete Signal Ultraschall ist.

11. Verfahren nach irgendeinem der voranstehenden Ansprüche, wobei das empfangene Signal Licht ist und der Empfänger eine Videokamera ist.

12. Verfahren nach irgendeinem der voranstehenden Ansprüche, wobei der Abstand der Einrichtung durch Messen der Menge an Fluid gemessen wird, das in die Rohrleitung stromabwärts von der Einrichtung gepumpt wird und/oder der Menge an Fluid, das die Rohrleitung stromabwärts der Einrichtung verlässt.

13. Verfahren nach irgendeinem der voranstehenden Ansprüche, wobei der Druck stromabwärts und stromaufwärts der Einrichtung gemessen wird.

14. Verfahren nach Anspruch 13, wobei die gemessenen Drucke registriert oder gespeichert werden.

15. Verfahren nach irgendeinem der voranstehenden Ansprüche, wobei die Elliptizität gemessen wird.

16. Verfahren nach irgendeinem der voranstehenden Ansprüche, wobei die Dicke der Wand bevorzugt durch Reflektion von der Innenseite und der Außenseite der Wand gemessen wird.

17. Verfahren nach irgendeinem der voranstehenden Ansprüche, wobei vor der Prüfung der Rohrleitung mittels der Einrichtung ein Blindmolch bzw. -rohrreiniger durch die Rohrleitung z.B. zur Erfassung von Hindernissen in der Rohrleitung, die die Einrichtung beschädigen könnten, hindurch befördert wird.

18. Verfahren nach irgendeinem der voranstehenden Ansprüche, wobei der zumindest eine Sender und der zumindest eine Empfänger auf dem inneren Gehäuse zur Außenseite angeschlossen sind.

19. Verfahren nach irgendeinem der voranstehenden Ansprüche, wobei das äußere Gehäuse ein herkömmlicher Reinigungsschaummolch bzw. Reinigungsschaumrohrreiniger zur Beförderung durch Rohrleitungen für Wasser ist, wobei der Schaummolch bzw. -rohrreiniger z.B. aus Polyurethanschaum hergestellt ist.

20. Verfahren nach irgendeinem der voranstehenden Ansprüche, wobei das innere Gehäuse in das äußere Gehäuse eingeformt ist.

21. Verfahren nach irgendeinem der voranstehenden Ansprüche, wobei der Sender angeordnet ist, um ein drahtloses Signal zu der (inneren) Wand von der Rohrleitung zu übertragen und wobei der Empfänger angeordnet ist um eine Reflektion des gesendeten Signals auf der Wand der Rohrleitung für die innere Prüfung der Rohrleitung zu empfangen.

22. Verfahren nach Anspruch 21, wobei mehrere Sender und Empfänger vorgesehen sind, welche entlang eines Umfanges der Einrichtung angeordnet sind, um Informationen von der (inneren) Wand der Rohrleitung zu erhalten, welche Informationen in Kombination einen vollständigen umfänglichen Abschnitt der Wand umfassen bzw. abdecken.

23. Verfahren nach Anspruch 21 oder 22, wobei der zumindest eine Sender und der zumindest eine Empfänger angeordnet sind, um zum Abtasten eines vollständigen umfänglichen Abschnittes der Wand zu rotieren.

24. Verfahren nach irgendeinem der voranstehenden Ansprüche, wobei der Sender zumindest eine Lampe zum Senden von Licht aufweist und wobei der Empfänger zumindest eine Kamera aufweist, um zumindest ein Bild der Wand der Rohrleitung zu erhalten, die mittels der zumindest einen Lampe beleuchtet wird.

25. Verfahren nach Anspruch 24, wobei die zumindest eine Lampe im Betrieb sichtbares Licht sendet und wobei die zumindest eine Kamera angeordnet ist, um sichtbares Licht zu erfassen, um das zumindest eine Bild zu erhalten.

26. Verfahren nach Anspruch 24 oder 25, wobei der Öffnungswinkel der Kamera in eine axiale Richtung der Einrichtung ausgerichtet ist, die sich in eine Beförderungsrichtung der Einrichtung (eine axiale Richtung der Rohrleitung) oder rückwärts relativ zu der Beförderungsrichtung erstreckt, oder wobei der Öffnungswinkel der Kamera von der Beförderungsrichtung der Einrichtung abweicht.

27. Verfahren nach Anspruch 24, 25 oder 26, wobei die Kamera eine Weitwinkellinse aufweist.

28. Verfahren nach Anspruch 26 oder 27, wobei die Einrichtung mit zumindest einem Seitensichtspiegel versehen ist, um Bilder der Seitenwand mittels der Kamera zu erhalten.

29. Verfahren nach Anspruch 28, wobei die Einrichtung angeordnet ist, um den Spiegel um eine Achse zu drehen, die sich mit einer axialen Richtung der Einrichtung deckt, die sich in einer Beförderungsrichtung der Einrichtung zum Abtasten der Wand der Rohrleitung in einer tangentialen Richtung der Rohrleitung erstreckt.

30. Verfahren nach irgendeinem der voranstehenden Ansprüche, wobei der Sender mit zumindest einem Lasersender versehen ist, um einen Laserstrahl zu der Wand der Rohrleitung zu senden und wobei ein Empfänger angeordnet ist, um Laserlicht von dem Laserstrahl zu empfangen, der auf der Wand der Rohrleitung reflektiert wird.

31. Verfahren nach irgendeinem der voranstehenden Ansprüche, wobei der zumindest eine Sender für eine Ultraschallsendung in Richtung der Wand der Rohrleitung angeordnet ist, und wobei der zumindest eine Empfänger zum Empfangen von Ultraschall von dem gesendeten Ultraschall angeordnet ist, welcher auf der Wand der Rohrleitung reflektiert wird.

32. Verfahren nach irgendeinem der voranstehenden Ansprüche, wobei die Einrichtung ferner eine Positionierungseinrichtung in dem inneren Gehäuse oder innerhalb der äußeren flexiblen Schale bzw. Hülle aufweist.

33. Verfahren nach Anspruch 32, wobei die Positionierungseinrichtung angeordnet ist, um eine Beförderungsentfernung der Einrichtung in einer Rohrleitung zu messen.

34. Verfahren nach Anspruch 32 oder 33, wobei die Positionierungseinrichtung einen GPS-Empfänger und/oder einen Radiosender aufweist.

35. Verfahren nach irgendeinem der Ansprüche 32, 33 oder 34, wobei die Positionierungseinrichtung ein rotierbares Rad und ein Drehungsregistrierungselement aufweist, das dazu in der Lage ist, Drehungen des drehbaren Rades zu messen.

## Revendications

1. Procédé pour l'inspection de pipelines, le procédé comprenant les étapes consistant :
- à introduire un dispositif dans un pipeline devant être inspecté, dans lequel le dispositif comprend une coque extérieure conforme entourant un boîtier interne comprenant une alimentation électrique, un extérieur et un circuit électrique logique, au moins un transmetteur et au moins un récepteur connectés au boîtier interne, le au moins un récepteur et le au moins un transmetteur étant connectés électriquement au circuit électrique logique, le procédé comprenant par ailleurs les étapes consistant :
- à fermer éventuellement le pipeline ;
- à amener le dispositif à être transporté à l'intérieur du pipeline par une différence de pression du fluide sur chacun des deux côtés du dispositif ;
- à transmettre au moins un signal à partir du dispositif ;
- à recevoir un signal réfléchi par la paroi du pipeline ;
- à enregistrer, à consigner, à traiter et / ou à transmettre les signaux réfléchis, plus particulièrement, à enregistrer, à consigner, à traiter et / ou à transmettre les signaux reçus ;
- à contrôler la vitesse de déplacement du dispositif en régulant le débit du fluide et en contrôlant la différence de pression, **caractérisé en ce que** l'étape de contrôle de la vitesse comprend l'étape consistant à contrôler la vitesse de telle sorte qu'une vibration du dispositif dans le pipeline est évitée ou limitée et / ou **en ce que** l'étape de contrôle de la vitesse comprend l'étape consistant à contrôler la vitesse de telle sorte qu'un tourbillon de débris dans le fluide dans le pipeline est évité ou limité.

2. Procédé selon la revendication 1, comprenant l'étape consistant :
- à accumuler de la pression en introduisant un fluide dans le pipeline au niveau de l'un des côtés du dispositif.

3. Procédé selon la revendication 1 ou 2, comprenant l'étape consistant :
à amener le dispositif à être transporté à l'intérieur du pipeline en créant une différence de pression dans le fluide entre les deux côtés du dispositif, lesquels côtés, à l'utilisation, sont séparés l'un de l'autre dans une direction axiale du pipeline.

4. Procédé selon l'une quelconque des revendications 1 à 3, dans lequel la vitesse du dispositif à l'intérieur du pipeline est réduite si le dispositif vibre dans le pipeline et / ou si un tourbillon de débris se produit dans le fluide.

5. Procédé selon la revendication 4, dans lequel la vitesse du dispositif à l'intérieur du pipeline est réduite en réduisant la différence de pression et / ou en réduisant le débit du fluide à l'intérieur du pipeline.

6. Procédé selon l'une quelconque des revendications précédentes, dans lequel l'étape de contrôle de la vitesse de déplacement du dispositif réduit le débit du fluide de telle sorte que la quantité de débris tourbillonnants et / ou de vibrations est limitée.

7. Procédé selon l'une quelconque des revendications précédentes, dans lequel le pipeline est un pipeline pour le transport d'eau.

8. Procédé selon l'une quelconque des revendications précédentes, dans lequel le fluide est de l'eau.

9. Procédé selon l'une quelconque des revendications précédentes, dans lequel le fluide est de l'air ou un autre gaz.

10. Procédé selon l'une quelconque des revendications précédentes, dans lequel le signal transmis est un signal ultrasonore.

11. Procédé selon l'une quelconque des revendications précédentes, dans lequel le signal reçu est de la lumière et le récepteur est une caméra vidéo.

12. Procédé selon l'une quelconque des revendications précédentes, dans lequel la distance du dispositif est mesurée en mesurant la quantité de fluide qui est pompé à l'intérieur du pipeline en aval du dispositif et / ou la quantité de fluide qui sort du pipeline en aval du dispositif.

13. Procédé selon l'une quelconque des revendications précédentes, dans lequel la pression en aval et la pression en amont du dispositif sont mesurées.

14. Procédé selon la revendication 13, dans lequel les pressions mesurées sont consignées ou enregistrées.

15. Procédé selon l'une quelconque des revendications précédentes, dans lequel l'ellipticité est mesurée.

16. Procédé selon l'une quelconque des revendications précédentes, dans lequel une épaisseur de la paroi est mesurée, de préférence par une réflexion de l'intérieur et de l'extérieur de la paroi.

17. Procédé selon l'une quelconque des revendications précédentes, dans lequel, avant d'inspecter le pipeline au moyen du dispositif, un dispositif racleur est amené à circuler à travers le pipeline, par exemple, pour détecter des obstacles éventuels dans le pipeline qui pourraient endommager le dispositif.

18. Procédé selon l'une quelconque des revendications précédentes, dans lequel le au moins un transmetteur et le au moins un récepteur sont connectés avec l'extérieur sur le boîtier interne.

19. Procédé selon l'une quelconque des revendications précédentes, dans lequel le boîtier externe est un dispositif racleur de nettoyage standard en mousse adapté pour se déplacer à l'intérieur de pipelines de transport d'eau, le dispositif racleur en mousse étant fait par exemple en mousse de polyuréthane.

20. Procédé selon l'une quelconque des revendications précédentes, dans lequel le boîtier interne est moulé à l'intérieur du boîtier externe.

21. Procédé selon l'une quelconque des revendications précédentes, dans lequel le transmetteur est configuré de façon à envoyer un signal sans fil vers la paroi (interne) du pipeline, et le récepteur est configuré de façon à recevoir une réflexion du signal transmis sur la paroi du pipeline en vue de l'inspection interne du pipeline.

22. Procédé selon la revendication 21, dans lequel une pluralité de transmetteurs et une pluralité de récepteurs sont prévues, qui sont agencées le long d'une circonférence du dispositif dans le but d'obtenir des informations de la paroi (interne) du pipeline, lesquelles informations, une fois combinées, couvrent une partie de circonférence totale de la paroi.

23. Procédé selon la revendication 21 ou 22, dans lequel le au moins un transmetteur et le au moins un récepteur sont configurés de façon à tourner dans le but de balayer une partie de circonférence totale de la paroi.

24. Procédé selon l'une quelconque des revendications précédentes, dans lequel le transmetteur comprend au moins une lampe pour transmettre une lumière et dans lequel le récepteur comprend au moins une caméra pour obtenir au moins une image de la paroi du pipeline qui est éclairée au moyen de ladite au moins une lampe.

25. Procédé selon la revendication 24, dans lequel la au moins une lampe, à l'utilisation, transmet une lumière visible et dans lequel la au moins une caméra est configurée de façon à détecter une lumière visible de sorte à obtenir la au moins une image.

26. Procédé selon la revendication 24 ou 25, dans lequel l'angle d'ouverture de la caméra est dirigé dans une direction axiale du dispositif qui s'étend dans une direction de déplacement du dispositif (une direction axiale du pipeline) ou vers l'arrière par rapport à ladite direction de déplacement ou dans lequel l'angle d'ouverture de la caméra dévie par rapport à la direction de déplacement du dispositif.

27. Procédé selon la revendication 24, 25 ou 26, dans lequel la caméra comprend un objectif grand-angle.

28. Procédé selon la revendication 26 ou 27, dans lequel le dispositif est pourvu d'au moins un rétroviseur latéral pour obtenir des images de la paroi latérale au moyen de la caméra.

29. Procédé selon la revendication 28, dans lequel le dispositif est configuré de façon à faire tourner le rétroviseur autour d'un axe correspondant à une direction axiale du dispositif qui s'étend dans une direction de déplacement du dispositif dans le but de balayer la paroi du pipeline dans une direction tangentielle du pipeline.

30. Procédé selon l'une quelconque des revendications précédentes, dans lequel le transmetteur est pourvu d'au moins un transmetteur laser pour transmettre un faisceau laser vers la paroi du pipeline et dans lequel le récepteur est configuré de façon à recevoir une lumière laser en provenance du faisceau laser qui est réfléchie sur la paroi du pipeline.

31. Procédé selon l'une quelconque des revendications précédentes, dans lequel le au moins un transmetteur est configuré de façon à transmettre le signal ultrasonore vers la paroi du pipeline et dans lequel le au moins récepteur est configuré de façon à recevoir un signal ultrasonore à partir du signal ultrasonore transmis qui est réfléchi sur la paroi du pipeline.

32. Procédé selon l'une quelconque des revendications précédentes, dans lequel le dispositif comprend par ailleurs un dispositif de positionnement dans le boîtier interne ou à l'intérieur de la coque externe conforme.

33. Procédé selon la revendication 32, dans lequel le dispositif de positionnement est configuré de façon à mesurer une distance de déplacement du dispositif dans un pipeline.

34. Procédé selon la revendication 32 ou 33, dans lequel le dispositif de positionnement comprend un récepteur GPS et / ou un transmetteur radio.

35. Procédé selon l'une quelconque des revendications 32, 33 ou 34, dans lequel le dispositif de positionnement comprend une roue rotative et un instrument de comptage de nombre de tours qui est apte à mesurer un nombre de tours de la roue rotative.
